# EUROPÄISCHE PATENTSCHRIFT

(11) **EP 1 104 863 B1**
(45) Veröffentlichungstag und Bekanntmachung des Hinweises auf die Patenterteilung: **04.08.2004**
(21) Anmeldenummer: 00124612.3
(22) Anmeldetag: 10.11.2000
(51) Int. Cl.: F16K 31/00, F15B 13/043

(54) **Piezoventil und Verfahren zur Herstellung eines Piezoventils**
Piezo valve and method to produce a piezo valve
Soupape pièzo-électrique et procédé pour produire une soupape pièzo-électrique

(30) Priorität: 02.12.1999 DE 19957959
(43) Veröffentlichungstag der Anmeldung: 06.06.2001
(73) Patentinhaber: Festo AG & Co, 73734 Esslingen (DE)
(72) Erfinder: Bogdanowicz, Gregor, 73760 Ostfildern (DE); Weinman, Michael, Dr., 73655 Plüderhausen (DE); Hoffmann, Markus, 72649 Wolfschlugen (DE); Jentschke, Michael, 73773 Aichwald (DE)
(74) Vertreter: Abel, Martin, Dipl.-Ing.

(56) Entgegenhaltungen:
- EP-A- 0 128 447
- EP-A- 0 565 510
- US-A- 5 779 218

## Beschreibung

Die vorliegende Erfindung betrifft zum einen ein Piezoventil, das ein Ventilgehäuse aufweist, in dem sich ein Piezo-Biegeelement erstreckt, das mit einem Halteabschnitt am einen Endbereich gehäusefest festgelegt ist und dessen anderer Endbereich als beweglicher Steuerabschnitt ausgeführt ist, der einem Ventilsitz gegenüberliegt, gegen den er mechanisch mit einer Schließkraft vorgespannt ist. Zum anderen betrifft die Erfindung ein Verfahren zur Herstellung eines derartigen Piezoventils.

Piezoventile verfügen regelmäßig über ein längliches, aus piezoelektrischen Werkstoffen aufgebautes längliches Biegeelement, das auch als Biegewandler bezeichnet wird und das einenends mit einem Halteabschnitt am Ventilgehäuse befestigt ist. Durch Anlegen einer Spannung läßt sich der dem freien Endbereich zugeordnete Steuerabschnitt seitwärts auslenken, um durch das Zusammenwirken mit einem oder mehreren gehäuseseitigen Ventilsitzen eine Fluidströmung zu steuern.

Um bereits im spannungslosen Zustand eine definierte Schaltstellung vorzugeben, können Piezoventile dahingehend ausgelegt werden, daß der Steuerabschnitt ihres Biegeelementes mit einer vorgegebenen Schließkraft mechanisch gegen einen Ventilsitz vorgespannt ist. Piezoventile dieser Art gehen beispielsweise aus der WO 97/09555 hervor, wobei die mechanische Vorspannung dadurch realisiert wird, daß man den Halteabschnitt durch eine nachträglich eingebrachte Vergußmasse erst fixiert, nachdem man den Steuerabschnitt durch eine externe Beaufschlagungseinrichtung mit einer vorgegebenen Kraft gegen einen Ventilsitz vorgespannt hat. Bei anderen Ausführungsformen, zum Beispiel gemäß EP 0 538 236 B1 oder DE 43 20 909 C1 wird die Schließkraft durch eine zusätzliche mechanische Federeinrichtung hervorgerufen. Im Falle der DE 34 00 645 C2 schließlich wird die Vorspannung durch variable Positionierung des bezüglich des Ventilgehäuses separat ausgebildeten Ventilsitzes hervorgerufen.

Ein Verfahren gemäß dem Oberbegriff des Auspruchs 1 (bzw.14) ist in US 5 779 218 Offenbart.

Es ist die Aufgabe der vorliegenden Erfindung, ein Verfahren zur Herstellung eines Piezoventils zu schaffen, mit dem sich die gewünschte Schließkraft mit relativ einfachen Mitteln auf sehr präzise Weise einstellen läßt. Ferner soll ein nach diesen Maßgaben gefertigtes Piezoventil bereitgestellt werden.

Diese Aufgabe wird im Zusammenhang mit einem Verfahren der eingangs genannten Art dadurch gelöst, daß man den Befestigungskörper und die erste Gehäuseeinheit unter gleichzeitigem Abgleiten und/oder Abwälzen der beiden Kontaktflächenanordnungen so weit relativ zueinander verlagert. bis der Steuerabschnitt des Biegeelementes mit der gewünschten Schließkraft am Ventilsitz anliegt, und das man anschließend den Befestigungskörper und die erste Gehäuseeinheit in der eingestellten Relativposition aneinander befestigt.

Bei diesem Verfahren wird zweckmäßigerweise die sich aus dem Biegeelement und dem Befestigungskörper zusammensetzende Baueinheit in die bereitstehende, ein- oder mehrteilige erste Gehäuseeinheit eingeführt, bis die beiderseitigen Kontaktflächen sich berühren. Der weitere Bewegungsablauf sieht eine durch die Einleitung externer Kräfte hervorgerufene Relativbewegung zwischen dem Befestigungskörper und der ersten Gehäuseeinheit vor, bei der diese beiden Bestandteile mit ihren Kontaktflächenanordnungen aneinander abgleiten oder abwälzen, wobei gleichzeitig der Steuerabschnitt an den zugeordneten Ventilsitz angenähert bzw. an diesen mit zunehmender Vorspannkraft angedrückt wird. Sobald sich hierbei die gewünschte Schließkraft eingestellt hat, wird die Relativbewegung zwischen der ersten Gehäuseeinheit und dem Befestigungskörper gestoppt und es werden diese beiden Ventilbestandteile aneinander befestigt, um den vorhandenen Vorspannungszustand dauerhaft zu konservieren. Die gewünschte Schließkraft läßt sich mit diesem Verfahren sehr variabel und präzise einstellen, da lediglich das Maß der Relativverlagerung zwischen dem Befestigungskörper und der ersten Gehäuseeinheit entsprechend vorgegeben werden muß. Die aktuell herrschende Vorspannung läßt sich beispielsweise dadurch überprüfen, daß an den zum Ventilsitz führenden Fluidkanal ein Druck angelegt und eine Dichtheitsprüfung vorgenommen wird.

Als besonders vorteilhaft wird erachtet, den Befestigungskörper als zweite Gehäuseeinheit auszuführen, die im an der ersten Gehäuseeinheit befestigten Zustand mit dieser zusammen das Ventilgehäuse bildet. Der Befestigungskörper hat auf diese Weise nicht nur eine Verankerungsfunktion, sondern stellt gleichzeitig einen Bestandteil des Ventilgehäuses dar, was den herstellungstechnischen Aufwand niedrig hält.

In diesem Zusammenhang kann auf einen besonders vorteilhaften Aufbau eines Piezoventils der eingangs genannten Art verwiesen werden. Dieses verfügt, zur Lösung der oben erwähnten Aufgabe, über ein Ventilgehäuse, das eine in einer Ventilkammer den Ventilsitz definierende erste Gehäuseeinheit sowie eine mit dieser ersten Gehäuseeinheit fest verbundene zweite Gehäuseeinheit aufweist, wobei das Biegeelement mit einem Halteabschnitt an der als Befestigungskörper fungierenden zweiten Gehäuseeinheit befestigt ist und mit seinem Steuerabschnitt ausgehend von der zweiten Gehäuseeinheit in die in der ersten Gehäuseeinheit ausgebildete Ventilkammer hineinragt, wobei die mechanisch erzeugte Schließkraft des Steuerabschnittes durch die beim Zusammenbau eingestellte Relativposition der aneinander befestigten Gehäuseeinheiten vorgegeben ist.

Bei der Herstellung des Piezoventils führt man zweckmäßigerweise das am Befestigungskörper befestigte Biegeelement mit dem Steuerabschnitt voraus durch eine Einführöffnung hindurch in eine in der ersten Gehäuseeinheit ausgebildete, den Ventilsitz enthaltende Ventilkammer ein, bis die beiden Kontaktflächenanordnungen in Kontakt miteinander gelangt sind, wonach man die die Vorspannung des Steuerabschnittes hervorrufende Relativbewegung veranlaßt. Die erste Kontaktflächenanordnung wird hierbei zweckmäßigerweise im Bereich der Einführöffnung der ersten Gehäuseeinheit vorgesehen und befindet sich insbesondere an einem längsseitigen Endbereich der Ventilkammer.

Besonders einfach und mit hoher Festigkeit lassen sich der Befestigungskörper und die erste Gehäuseeinheit durch einen Klebevorgang fest miteinander verbinden. Der Klebstoff kann hier gleichzeitig eine Dichtfunktion ausüben, um die Ventilkammer zur Umgebung hin abzudichten.

Eine weitere vorteilhafte Verfahrensweise sieht vor, daß man die beiden Kontaktflächenanordnungen gestalterisch derart aufeinander abstimmt, daß ein durch äußere Kräfte verursachtes gegenseitiges Abgleiten und/oder Abwälzen der Kontaktflächenanordnungen automatisch eine Relativbewegung zwischen dem Biegeelement und der ersten Gehäuseeinheit im Sinne einer Annäherung des Steuerabschnittes des Biegeelementes an den Ventilsitz zur Folge hat. Hier geben also die Kontaktflächenanordnungen unmittelbar durch ihre Formgebungen das Bewegungsverhalten des Biegeelementes vor, was einen Verzicht auf externe Führungen an der eingesetzten Montagevorrichtung ermöglicht.

Die zum Erzeugen der Vorspannung hervorgerufene Relativbewegung läßt sich beispielsweise durch ein relatives Verdrehen zwischen der ersten Gehäuseeinheit und dem Befestigungskörper realisieren, zu welchem Zweck man die beiden Kontaktflächenanordnungen vorzugsweise zumindest teilweise mit einer zylindrischen Konturierung versieht. Ferner wäre es möglich, den Befestigungskörper und die erste Gehäuseeinheit quer zur Längserstreckung des Biegeelementes relativ zueinander zu verschieben, wobei man die Verschieberichtung zweckmäßigerweise dadurch vorgibt, daß man die beiden Kontaktflächenanordnungen zumindest teilweise als geneigt zur Längserstrekkung des Biegeelementes verlaufende Schrägflächen ausführt.

Nachfolgend wird die Erfindung anhand der beiliegenden Zeichnung näher erläutert. Dabei zeigen:

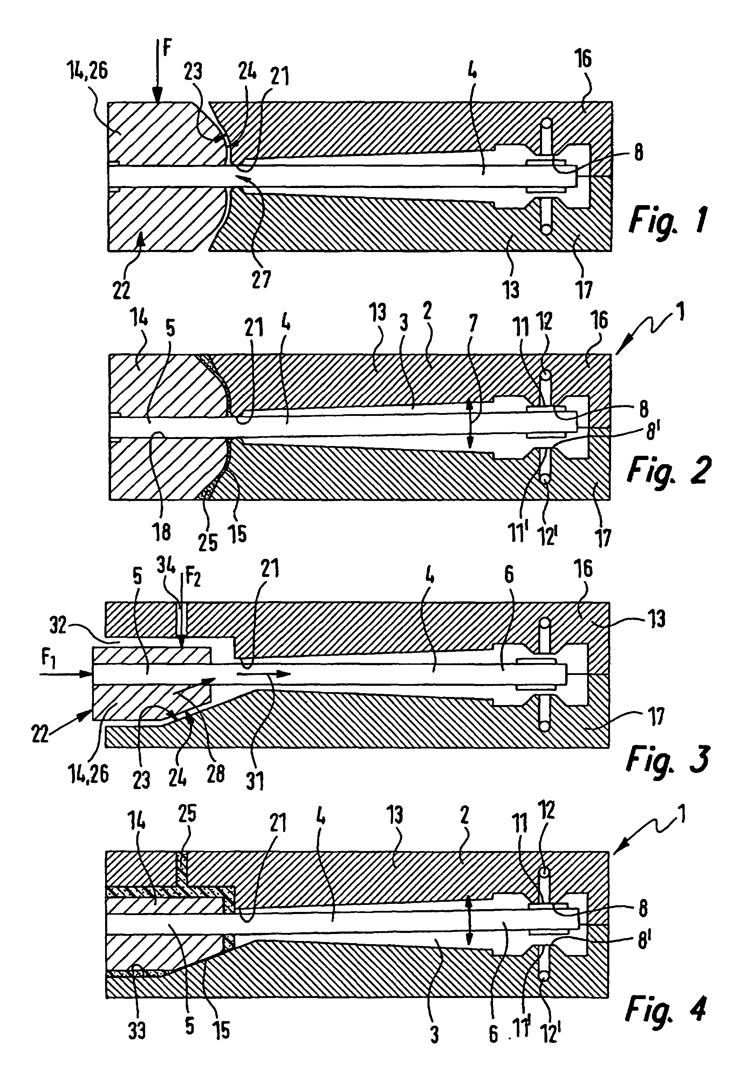

- Figuren 2 und 4: jeweils im Längsschnitt unterschiedliche Ausführungsbeispiele eines mit dem erfindungsgemäßen Verfahren hergestellten Piezoventils, und
- Figuren 1 und 3: jeweils ein Zwischenstadium bei der Herstellung der in Figuren 2 und 4 gezeigten Piezoventile.

Anhand der Figuren 2 und 4 sei zunächst der allgemeine Aufbau zweier Ausführungsbeispiele des erfindungsgemäßen Piezoventils im fertiggestellten Zustand erläutert.

Die allgemein mit Bezugsziffer 1 bezeichneten Piezoventile enthalten jeweils ein Ventilgehäuse 2, in dem eine Ventilkammer 3 ausgebildet ist.

Ein längliches, balkenartiges Piezo-Biegeelement 4 ist mit seinem rückwärtigen Endbereich, der einen Halteabschnitt 5 bildet, gehäusefest starr fixiert und ragt mit einem frei endenden Steuerabschnitt 6 in die Ventilkammer 3 hinein.

Im Bereich des Halteabschnittes 5 ist das Biegeelement 4 auf nicht näher dargestellte Weise elektrisch kontaktiert, so daß von außen her eine elektrische Spannung anlegbar ist, durch die sich das aus piezoelektrischem Werkstoff aufgebaute Biegeelement 4 im Bereich seines Steuerabschnittes 6 zu einer durch Doppelpfeil angedeuteten Schwenkbewegung veranlassen läßt, die nachfolgend als Schaltbewegung 7 bezeichnet sei.

Dem Steuerabschnitt 6 liegt im Bereich seines freien Endes auf zumindest einer Längsseite und in der Ebene der Schaltbewegung 7 ein gehäuseseitiger Ventilsitz 8, 8' gegenüber, der eine Kanalmündung 11, 11' umgrenzt, die jeweils das Ende eines das Ventilgehäuse 2 durchsetzenden Fluidkanales 12, 12' markiert.

Das Biegeelement 4 ist derart am Ventilgehäuse 2 festgelegt, daß sein Steuerabschnitt 6 im elektrisch spannungslosen Zustand mit einer vorgegebenen Schließkraft mechanisch gegen einen der Ventilsitze 8 vorgespannt ist. Der Steuerabschnitt 6 liegt dabei dichtend am betreffenden Ventilsitz 8 an und unterbindet die Fluidverbindung zwischen dem zugeordneten Fluidkanal 12 und der Ventilkammer 3. Dieser Zustand ist in Figuren 2 und 4 gezeigt.

Ein über den Fluidkanal 12 zugeführtes Druckmedium ist in dieser Schließstellung des Steuerabschnittes 6 an einem Einströmen in die Ventilkammer 3 und einem Überströmen zum anderen Fluidkanal 12' gehindert. Gleichzeitig kommuniziert der dem anderen Ventilsitz 8' zugeordnete Fluidkanal 12' über die Ventilkammer 3 mit einem nicht näher dargestellten weiteren Fluidkanal, der ebenfalls mit der Ventilkammer 3 in Verbindung steht. Dieser weitere Fluidkanal kann beispielsweise ein zu einem Verbraucher führender Kanal sein, der in der gezeigten Schließstellung über den zweiten Fluidkanal 12' entlüftet wird.

Durch Anlegen einer Spannung an das Biegeelement 4 läßt sich der Steuerabschnitt 6 vom Ventilsitz 8 abheben und im Rahmen der Schaltbewegung 7 an den anderen, zweiten Ventilsitz 8' anlegen. Das über den ersten Fluidkanal 12 eingespeiste Druckmedium kann nun über den dritten, nicht dargestellten Fluidkanal zum Verbraucher abströmen, während der als Entlüftungskanal fungierende Fluidkanal 12' abgesperrt ist. Das Piezoventil 1 arbeitet hier als 3/2-Wegeventil.

Beispielsweise könnte das Piezoventil 1 auch als einfaches 2/2-Wegeventil ausgebildet sein, wobei es nur über die beiden abgebildeten Fluidkanäle 12, 12' verfügt. Hier läßt sich der Steuerabschnitt 6 derart elektrisch aus der Schaltstellung auslenken, daß beide Kanalmündungen 11, 11' freigegeben sind, um bei Bedarf ein Überströmen eines Druckmediums, insbesondere Druckluft, zwischen den beiden Fluidkanälen 12, 12' zu gestatten.

Das Ventilgehäuse 2 setzt sich aus einer ersten (13) und einer zweiten (14) Gehäuseeinheit zusammen, die in einem Fügebereich 15 unter Abdichtung fest miteinander verbunden sind.

Die Gehäuseeinheiten 13, 14 können jeweils prinzipiell einoder mehrteilig aufgebaut sein. Beim Ausführungsbeispiel besteht die erste Gehäuseeinheit 13 aus zwei unter Abdichtung aneinandergesetzten und fest miteinander verbundenen Gehäusekörpern 16, 17, die jeweils eine schalenförmige Gestalt haben können und im Bereich der Fügezone mit Ausnehmungen versehen sind, die sich im zusammengesetzten Zustand zu der Ventilkammer 3 ergänzen. Die Gehäusekörper 16, 17 sind zweckmäßigerweise miteinander verklebt.

Die zweite Gehäuseeinheit 14 ist beim Ausführungsbeispiel einteilig ausgebildet und verfügt über eine Durchbrechung oder Ausnehmung 18, in die das Biegeelement 4 mit dem Halteabschnitt 5 eingesteckt und befestigt ist.

Das Biegeelement 4 ragt ausgehend von der zweiten Gehäuseeinheit 14 durch eine an der ersten Gehäuseeinheit 13 vorgesehene Einführöffnung 21 hindurch in die Ventilkammer 3 hinein. Durch die zweite Gehäuseeinheit 14 erfolgt eine fluiddichte Absperrung der Einführöffnung 21, so daß die Ventilkammer 3, abgesehen von den Kanalmündungen, ringsum dicht verschlossen ist. Die Einführöffnung 21 ist zweckmäßigerweise einem der beiden längsseitigen Endbereiche der Ventilkammer 3 zugeordnet, liegt also entgegengesetzt zu demjenigen Endbereich, in dem sich die mit dem Ventilsitz 8 zusammenarbeitende Partie des Steuerabschnittes 6 befindet.

Bei der Herstellung der Piezoventile 1 wird jeweils zunächst die erste Gehäuseeinheit 13 gefertigt. Hierzu werden beim Ausführungsbeispiel die beiden Gehäusekörper 16, 17 mit den benötigten Fluidkanälen und Ventilsitzen versehen und unter Begrenzung der Ventilkammer 3 aneinandergesetzt und fest miteinander verbunden. Bei noch nicht installiertem Biegeelement 6 steht die Ventilkammer 3 über die Einführöffnung 21 mit der unmittelbaren Umgebung in Verbindung.

Unabhängig von der ersten Gehäuseeinheit 13 wird das Biegeelement 4 mit der zweiten Gehäuseeinheit 14 zu einer Baueinheit vereinigt, die nachfolgend als Montageeinheit 22 bezeichnet sei. Dabei ist das Biegeelement 4 mit seinem Halteabschnitt 5 in der zweiten Gehäuseeinheit 14 fest verankert und ragt mit seinem Steuerabschnitt 6 frei endend heraus.

Die erste Gehäuseeinheit 13 verfügt im Bereich der Einführöffnung 21 an der im zusammengesetzten Zustand der zweiten Gehäuseeinheit 14 zugewandten Seite über eine erste Kontaktflächenanordnung 23. An der zweiten Gehäuseeinheit 14 ist eine zumindest partiell komplementär ausgeführte zweite Kontaktflächenanordnung 24 vorgesehen. Die Kontaktflächenanordnungen können erzeugt werden, nachdem die erste Gehäuseeinheit 13 und die Montageeinheit 22 jeweils zusammengesetzt sind. Allerdings ist eine Fertigung bei noch zerlegter erster Gehäuseeinheit 13 und Montageeinheit 22 technisch einfacher zu realisieren.

Nachdem auf diese Weise die erste Gehäuseeinheit 13 und die Montageeinheit 22 vorbereitet sind, werden diese Einheiten zusammengefügt, wobei man das Biegeelement 4 mit dem Steuerabschnitt 6 voraus durch die Einführöffnung 21 hindurch in die Ventilkammer 3 einführt. Dieser maßgebliche Einführvorgang endet, wenn die an der zweiten Gehäuseeinheit 14 vorgesehene zweite Kontaktflächenanordnung 24 an der ersten Kontaktflächenanordnung 23 der ersten Gehäuseeinheit 13 zur Anlage gelangt. Die Figuren 1 und 3 zeigen das Piezoventil bei dem geschilderten Einführvorgang kurz vor der Berührung zwischen den beiden Kontaktflächenanordnungen 23, 24.

Anschließend werden die beiden Gehäuseeinheiten 13, 14 unter Aufrechterhaltung des Berührkontaktes ihrer beiderseitigen Kontaktflächenanordnung 23, 24 relativ zueinander verlagert, wobei die Kontaktflächenanordnungen 23, 24 eine Führungsfunktion für die Relativbewegung ausüben, indem sie aneinander abgleiten, sich aufeinander abwälzen oder in einem kombinierten Gleit/Wälzvorgang ihre Relativposition ändern. Dies alles geht einher mit einer gleichzeitigen Relativbewegung zwischen dem Steuerabschnitt 6 des Biegeelementes 4 und dem zugeordneten Ventilsitz 8, wobei sich der Steuerabschnitt 6 an diesen Ventilsitz 8 annähert bzw., im bereits daran anliegenden Zustand, mit zunehmender Kraft gegen den Ventilsitz 8 vorgespannt wird. Die Relativbewegung wird soweit ausgeführt, bis schließlich der Steuerabschnitt 6 mit der gewünschten Schließkraft am Ventilsitz 8 anliegt.

Die Beaufschlagung der beiden Gehäuseeinheiten 13, 14 zum Zwecke der Erzeugung der gewünschten Relativbewegung erfolgt zweckmäßigerweise innerhalb einer geeigneten Vorrichtung, die zweckmäßigerweise auch mit Mitteln ausgestattet ist, um die gewünschte Schließkraft exakt vorgeben zu können. Beispielsweise könnte man anhand der aufgebrachten Kräfte auf die im Bereich des Ventilsitzes herrschenden Vorspannkräfte schließen. Eine weitere vorteilhafte Verifizierungmethode für die Vorspannkraft besteht darin, während der Beaufschlagung der beiden Gehäuseeinheiten 13, 14 über den dem Ventilsitz 8 zugeordneten Fluidkanal 12 ein Druckmedium, insbesondere Druckluft, einzuspeisen und anhand der gemessenen Leckage bzw. über eine Dichtheitsprüfung die gewünschte Schließkraft zu überprüfen.

Ist die gewünschte Schließkraft eingestellt, werden die beiden Gehäuseeinheiten 13, 14 starr und unbeweglich aneinander befestigt. Diese Befestigung kann prinzipiell auf jede beliebige Art und Weise erfolgen, wird beim Ausführungsbeispiel jedoch vorteilhaft durch eine Klebeverbindung realisiert. In Figuren 2 und 4 ist ein im Fügebereich zwischen den beiden Gehäuseeinheiten 13, 14 eingebrachter Kleber 25 ersichtlich.

Anstelle einer Klebeverbindung könnte beispielsweise auch eine Schweißverbindung vorgenommen werden, bei Kunststoffbauteilen vorzugsweise durch Ultraschall-Schweißen.

Bei dem bis dahin fertiggestellten Piezoventil ist also die mechanisch erzeugte Schließkraft des Steuerabschnittes 6 durch die beim Zusammenbau individuell eingestellte Relativposition der aneinander befestigten Gehäuseeinheiten 13, 14 vorgegeben.

Das Herstellungsverfahren ließe sich auch dadurch realisieren, daß anstelle der zweiten Gehäuseeinheit 2 ein anderer Befestigungskörper 26 verwendet wird, der in geeigneter Weise mit der ersten Gehäuseeinheit 3 vereinigt wird. Allerdings ist es von Vorteil, wenn der Befestigungskörper 26 gleichzeitig eine Gehäusefunktion übernimmt und wie bei den Ausführungsbeispielen unmittelbar von einem Bestandteil des Ventilgehäuses 2 gebildet ist. An diesen Ausführungsbeispielen soll sich die Beschreibung auch weiterhin orientieren, wobei alle Bezugnahmen auf die zweite Gehäuseeinheit 14 auch als Bezugnahmen auf einen beliebigen anderen Befestigungskörper 26 zu verstehen sind.

Vorzugsweise sind die beiden Kontaktflächenanordnungen 23, 24 durch ihre Gestaltung bzw. Konturierung derart aufeinander abgestimmt, daß bei entsprechender externer Krafteinleitung durch die kooperierenden Kontaktflächenanordnung 23, 24 unmittelbar die Bewegungsbahn der erzeugten Relativbewegung vorgegeben wird. Auf diese Weise läßt sich gewährleisten, daß zwar die zur Einstellung der gewünschten Schließkraft erforderlichen Bewegungsfreiheitsgrade gegeben sind, gleichzeitig aber die gewünschte örtliche Zuordnung zwischen dem Steuerabschnitt 6 und dem Ventilsitz 8 nicht verloren geht. Anhand der Figuren 1 und 2 sowie Figuren 3 und 4 sind zwei besonders vorteilhafte Gestaltungsformen für die Kontaktflächenanordnungen 23, 24 ersichtlich.

Beim Ausführungsbeispiel der Figuren 1 und 2 sind die Kontaktflächenanordnungen 23, 24 zumindest partiell mit einer zueinander komplementären zylindrischen Konturierung versehen. Die an der ersten Gehäuseeinheit 13 vorgesehene erste Kontaktflächenanordnung 23, die sich im Umgebungsbereich der Einführöffnung 21 befindet, ist konkav geformt, während die zweite Kontaktflächenanordnung 24 der zweiten Gehäuseeinheit 14 konvex ausgewölbt ist. Hier wird, nachdem das Biegeelement 4 als Bestandteil der Montageeinheit 22 in die Ventilkammer 3 eingeführt wurde, die zweite Gehäuseeinheit 14 derart mit einer Kraft F beaufschlagt daß die beiden Gehäuseeinheiten 13, 14 relativ zueinander verdreht werden. Dabei gleiten und/oder laufen die Kontaktflächenanordnungen 23, 24 aneinander ab. Ist, wie beim Ausführungsbeispiel, im Bereich der Einführöffnung 21 eine Abstützstelle 27 vorgesehen, an der das Biegeelement 4 in der Ebene der Schwenkbewegung an entgegengesetzten Längsseiten von der ersten Gehäuseeinheit 13 lokal abgestützt wird, kann der Bereich dieser Abstützstelle 27 das Zentrum der Dreh- bzw. Schwenkbewegung bilden.

Der Ausführungsform gemäß Figuren 3 und 4 liegt ein Vorspannprinzip zugrunde, bei dem man die beiden Gehäuseeinheiten 13, 14 zum Erhalt der gewünschten Vorspannung in einer Verschieberichtung 28 quer zur Längserstreckung des Biegeelementes 4 relativ zueinander verschiebt. Dieser Verschiebevorgang stellt dann praktisch eine Fortsetzung des eingangs geschilderten Einführvorganges dar, wobei eine Querbewegung überlagert ist, die das Biegeelement 4 mit seinem Steuerabschnitt 6 seitwärts, quer zu seiner eigenen Längserstreckung, an den Ventilsitz 8 heranführt.

Beim Ausführungsbeispiel ist dies dadurch realisiert, daß man die beiden Kontaktflächenanordnungen 23, 24 zumindest teilweise als geneigt zur Längserstreckung des Biegeelementes 4 verlaufende Schrägflächen ausführt, die, bezogen auf die in Längsrichtung der Ventilkammer 3 verlaufende Einführrichtung 31, sich nach innen hin zunehmend zum Biegeelement 4 annähern.

Da die zweite Gehäuseeinheit 14 bei dieser Ausführungsform mit zunehmender Vorspannkraft eine Querverlagerung erfährt, ist seitlich ein ausreichender Freiraum 32 zu gewährleisten, der beim Ausführungsbeispiel durch einen Spalt zwischen den beiden Gehäuseeinheiten 13, 14 vorgegeben ist. Um trotz dieses Freiraumes 32 die Führungsfunktion der Kontaktflächenanordnungen 23, 24 aufrechtzuerhalten, wird die zweite Gehäuseeinheit 14 mit einer Schubkraft F₁ in der Einführrichtung 31 beaufschlagt und gleichzeitig mit einer quer gerichteten Haltekraft F₂ gegen die als schiefe Ebene ausgeführte erste Kontaktflächenanordnung 23 der ersten Gehäuseeinheit 13 angedrückt.

Ist die Anordnung so getroffen, daß die zweite Gehäuseeinheit 14 im montierten Zustand zumindest teilweise und vorzugsweise vollständig in einer Ausnehmung 33 der ersten Gehäuseeinheit 13 einsitzt, kann die Haltekraft F₂ bei Bedarf von der Seite her durch eine die erste Gehäuseeinheit 13 durchsetzende und in die Ausnehmung 33 einmündende Durchbrechung 34 hindurch aufgebracht werden.

## Patentansprüche

1. Verfahren zur Herstellung eines Piezoventils, das ein Ventilgehäuse (2) aufweist, in dem sich ein Piezo-Biegeelement (4) erstreckt, das mit einem Halteabschnitt (5) am einen Endbereich gehäusefest festgelegt ist und dessen anderer Endbereich als beweglicher Steuerabschnitt (6) ausgeführt ist, der einem Ventilsitz (8) gegenüberliegt, gegen den er mechanisch mit einer Schließkraft vorgespannt ist, in dem man das Biegeelement (4) mit seinem Halteabschnitt (5) an einem zunächst noch relativ zu einer den Ventilsitz (8) aufweisenden ersten Gehäuseeinheit (13) des Ventilgehäuses (2) beweglichen Befestigungskörper (26) festlegt, und in dem man eine an der ersten Gehäuseeinheit (13) vorgesehene erste Kontaktflächenanordnung (23) mit einer am Befestigungskörper (26) vorgesehenen zweiten Kontaktflächenanordnung (24) in Kontakt bringt, **dadurch gekennzeichnet, daß** man den Befestigungskörper (26) und die erste Gehäuseeinheit (13) unter gegenseitigem Abgleiten und/oder Abwälzen der beiden Kontaktflächenanordnungen (23, 24) so weit relativ zueinander verlagert, bis der Steuerabschnitt (6) des Biegeelementes (4) mit der gewünschten Schließkraft am Ventilsitz (8) anliegt, und daß man anschließend den Befestigungskörper (26) und die erste Gehäuseeinheit (13) in der eingestellten Relativposition aneinander befestigt.

2. Verfahren nach Anspruch 1, **dadurch gekennzeichnet, daß** man den Befestigungskörper (26) als zweite Gehäuseeinheit (14) ausführt, die im an der ersten Gehäuseeinheit (13) befestigten Zustand mit dieser zusammen das Ventilgehäuse (2) bildet.

3. Verfahren nach Anspruch 1 oder 2, **dadurch gekennzeichnet, daß** man das am Befestigungskörper (26) befestigte Biegeelement (4) mit dem Steuerabschnitt (6) voraus durch eine Einführöffnung (21) hindurch in eine in der ersten Gehäuseeinheit (13) ausgebildete, den Ventilsitz (7) enthaltende Ventilkammer (3) einführt, bis die beiden Kontaktflächenanordnungen (23, 24) in Kontakt miteinander gelangt sind, wonach man die die Vorspannung des Steuerabschnittes (6) hervorrufende Relativbewegung veranlaßt.

4. Verfahren nach Anspruch 3, **dadurch gekennzeichnet, daß** man die Ventilkammer (3) mit einer länglichen Erstreckung ausführt und die erste Kontaktflächenanordnung (23) an einem längsseitigen Endbereich der Ventilkammer (3) vorsieht.

5. Verfahren nach Anspruch 3 oder 4, **dadurch gekennzeichnet, daß** man die erste Kontaktflächenanordnung (23) im Bereich der Einführöffnung (21) der ersten Gehäuseeinheit (13) vorsieht.

6. Verfahren nach einem der Ansprüche 1 bis 5, **dadurch gekennzeichnet, daß** man den Befestigungskörper (26) und die erste Gehäuseeinheit (13) in der eingestellten Relativposition durch Verkleben fest miteinander verbindet.

7. Verfahren nach einem der Ansprüche 1 bis 6, **dadurch gekennzeichnet, daß** man die beiden Kontaktflächenanordnungen (23, 24) gestalterisch derart aufeinander abstimmt, daß ein durch äußere Kräfte verursachtes gegenseitiges Abgleiten und/oder Abwälzen der Kontaktflächenanordnungen (23, 24) zwangsweise eine Relativbewegung zwischen dem Biegeelement (4) und der ersten Gehäuseeinheit (13) im Sinne einer Annäherung des Steuerabschnittes (6) des Biegeelementes (4) an den Ventilsitz (8) zur Folge hat.

8. Verfahren nach einem der Ansprüche 1 bis 7, **dadurch gekennzeichnet, daß** man den Befestigungskörper (26) und die erste Gehäuseeinheit (13) zum Erhalt der gewünschten Vorspannung des Steuerabschnittes (6) relativ zueinander verdreht oder verschwenkt.

9. Verfahren nach Anspruch 8, **dadurch gekennzeichnet, daß** man die beiden Kontaktflächenanordnungen (23, 24) zumindest teilweise mit einer zylindrischen Konturierung versieht.

10. Verfahren nach einem der Ansprüche 1 bis 7, **dadurch gekennzeichnet, daß** man den Befestigungskörper (26) und die erste Gehäuseeinheit (13) zum Erhalt der gewünschten Vorspannung quer zur Längserstreckung des Biegeelementes (4) relativ zueinander verschiebt.

11. Verfahren nach Anspruch 10, **dadurch gekennzeichnet, daß** man die beiden Kontaktflächenanordnungen (23, 24) zumindest teilweise als geneigt zur Längserstreckung des Biegeelementes (4) verlaufende Schrägflächen ausführt.

12. Verfahren nach einem der Ansprüche 1 bis 11, **dadurch gekennzeichnet, daß** man die einzustellende Vorspannung des Steuerabschnittes (6) durch eine Dichtheitsprüfung im Bereich des Ventilsitzes (8) verifiziert.

13. Verfahren nach einem der Ansprüche 1 bis 12, **dadurch gekennzeichnet, daß** man den Befestigungskörper (26) zumindest teilweise versenkt in der ersten Gehäuseeinheit (13) plaziert.

14. Piezoventil, mit einem Ventilgehäuse (2), in dem sich ein Piezo-Biegeelement (4) erstreckt, das mit einem Halteabschnitt (5) am einen Endbereich gehäusefest festgelegt ist und dessen anderer Endbereich als beweglicher Steuerabschnitt (6) ausgeführt ist, der einem Ventilsitz (8) gegenüberliegt, gegen den er mechanisch mit einer Schließkraft vorgespannt ist, wobei das Ventilgehäuse (2) eine in einer Ventilkammer (3) den Ventilsitz (8) definierende erste Gehäuseeinheit (13) sowie eine mit dieser ersten Gehäuseeinheit (13) fest verbundene zweite Gehäuseeinheit (14) aufweist, und wobei das Biegeelement (4) mit seinem Halteabschnitt (5) an der als Befestigungskörper (26) fungierenden zweiten Gehäuseeinheit (14) befestigt ist und mit seinem Steuerabschnitt (6) ausgehend von der zweiten Gehäuseeinheit (14) in die in der ersten Gehäuseeinheit (13) ausgebildete Ventilkammer (3) hineinragt, **dadurch gekennzeichnet, daß** die mechanisch erzeugte Schließkraft des Steuerabschnittes (6) durch die beim Zusammenbau eingestellte Relativposition der aneinander befestigten Gehäuseeinheiten (13, 14) vorgegeben ist.

15. Piezoventil nach Anspruch 14, **dadurch gekennzeichnet, daß** die Kontaktflächenanordnungen (23, 24) der beiden Gehäuseeinheiten (13, 14) in ihrem Berührbereich zumindest teilweise als Zylinderflächen oder als geneigt zur Längserstrekkung des Biegeelementes (4) verlaufende Schrägflächen ausgeführt sind.

## Claims

1. Method for the production of a piezo valve comprising a valve housing (2) in which a piezoelectric bending element (4) extends, one end area being located on the housing by a retaining section (5) while the other end area is designed as a movable control section (6) located opposite a valve seat (8) against which it is mechanically preloaded with a closing force by locating the bending element (4) with its retaining section (5) on a mounting body (26) initially movable relative to a first housing unit (13) of the valve housing (2), which is provided with the valve seat (8), and by bringing a first contact surface arrangement (23) on the first housing unit (13) into contact with a second contact surface arrangement (24) on the mounting body (26), **characterised in that** the mounting body (26) and the first housing unit (13) are displaced in relation to one another while the contact surface arrangements (23, 24) slide and/or roll on one another until the control section (6) of the bending element (4) lies against the valve seat (8) with the desired closing force, and **in that** the mounting body (26) and the first housing unit (13) are then secured to one another in the set relative position.

2. Method according to claim 1, **characterised in that** the mounting body (26) is designed as a second housing unit (14) forming the valve housing (2) together with the first housing unit (13) after being secured thereto.

3. Method according to claim 1 or 2, **characterised in that** the bending element (4) mounted on the mounting body (26) is introduced, with the control section (6) leading, through an insertion opening (21) into a valve chamber (3) provided in the first housing unit (13) and containing the valve seat (7), until the two contact surface arrangements (23, 24) are in contact with one another, whereupon the relative movement causing the preloading of the control section (6) is induced.

4. Method according to claim 3, **characterised in that** the valve chamber (3) is given an oblong shape and **in that** the first contact surface arrangement (23) is provided in a axial end area of the valve chamber (3).

5. Method according to claim 3 or 4, **characterised in that** the first contact surface arrangement (23) is provided in the area of the insertion opening (2 1 ) of the first housing unit (13).

6. Method according to any of claims 1 to 5, **characterised in that** the mounting body (26) and the first housing unit (13) are permanently secured to one another in the set relative position by bonding.

7. Method according to any of claims 1 to 6, **characterised in that** the shapes of the two contact surface arrangements (23, 24) are so matched to one another that any mutual sliding and/or rolling movement of the contact surface arrangements (23, 24) caused by external forces inevitably results in a relative movement between the bending element (4) and the first housing unit (13) in terms of an approach of the control section (6) of the bending element (4) towards the valve seat (8).

8. Method according to any of claims 1 to 7, **characterised in that** the mounting body (26) and the first housing unit (13) are rotated or swivelled relative to one another to obtain the desired preload of the control section (6).

9. Method according to claim 8, **characterised in that** the two contact surface arrangements (23, 24) are given an at least partially cylindrical contour.

10. Method according to any of claims 1 to 7, **characterised in that** the mounting body (26) and the first housing unit (13) are displaced relative to one another at right angles to the longitudinal dimension of the bending element (4) to obtain the desired preload.

11. Method according to claim 10, **characterised in that** the two contact surface arrangements (23, 24) are at least partially designed as inclined surfaces inclined relative to the longitudinal dimension of the bending element (4).

12. Method according to any of claims 1 to 11, **characterised in that** the preload of the control section (6) to be set is verified by a leak test in the area of the valve seat (8).

13. Method according to any of claims 1 to 12, **characterised in that** the mounting body (26) is at least partially recessed into the first housing unit (13).

14. Piezo valve comprising a valve housing (2) in which a piezoelectric bending element (4) extends, one end area being fixed to the housing by a retaining section (5) while the other end area is designed as a movable control section (6) located opposite a valve seat (8) against which it is mechanically preloaded with a closing force, whereby the valve housing (2) comprises a first housing unit (13) defining the valve seat (8) in a valve chamber (3) and a second housing unit (14) permanently joined to the first housing unit (13), and whereby the bending element (4) is by its retaining section (5) attached to the second housing unit (14) acting as mounting body (26) and projects with its control section (6) from the second housing unit (14) into the valve chamber (3) provided in the first housing unit (13), **characterised in that** the mechanically generated closing force of the control section (6) is predetermined by the relative position of the housing units (13, 14) joined to one another, which is set during assembly.

15. Piezo valve according to claim 14, **characterised in that** the contact surface arrangements (23, 24) of the two housing units (13, 14) are at least partially designed as cylindrical surfaces or as inclined surfaces inclined relative to the longitudinal dimension of the bending element (4) in their contact area.

## Revendications

1. Procédé pour la fabrication d'une soupape piézo-électrique, qui présente une cage de soupape (2), dans laquelle s'étend un élément flexible piézo-électrique (4), qui est fixé de façon solidaire au boîtier par une partie de maintien (5) sur une zone d'extrémité et dont l'autre zone d'extrémité est réalisée sous la forme d'une partie de commande (6) mobile, qui fait face à un siège de soupape (8), contre lequel elle est précontrainte de façon mécanique avec une force de fermeture, dans lequel on fixe l'élément flexible (4) par sa partie de maintien (5) sur un corps de fixation (26) mobile encore au début par rapport à une première unité de cage (13), présentant le siège de soupape (8), de la cage de soupape (2) et dans lequel on met en contact un premier agencement de surface de contact (23) prévu sur la première unité de cage (13) avec un second agencement de surface de contact (24) prévu sur le corps de fixation (26), **caractérisé en ce qu'**on déplace le corps de fixation (26) et la première unité de cage (13) avec un glissement réciproque et/ou un roulement des deux agencements de surface de contact (23, 24) l'un par rapport à l'autre jusqu'à ce que la partie de commande (6) de l'élément flexible (4) s'appuie avec la force de fermeture souhaitée sur le siège de soupape (8) et **en ce qu'**on fixe ensuite le corps de fixation (26) et la première unité de cage (13) dans la position relative réglée l'un contre l'autre.

2. Procédé selon la revendication 1, **caractérisé en ce qu'**on réalise le corps de fixation (26) sous la forme d'une seconde unité de cage (14) qui forme, dans l'état fixé sur la première unité de cage (13), conjointement avec cette unité la cage de soupape (2).

3. Procédé selon la revendication 1 ou 2, **caractérisé en ce qu'**on introduit l'élément flexible (4) fixé sur le corps de fixation (26) avec la partie de commande (6) à l'avance à travers une ouverture d'introduction (21) dans une chambre de soupape (3) réalisée dans la première unité de cage (13) et contenant le siège de soupape (8) jusqu'à ce que les deux agencements de surface de contact (23, 24) soient parvenus en contact l'un avec l'autre, après quoi on provoque le déplacement relatif entraînant la précontrainte de la partie de commande (6).

4. Procédé selon la revendication 3, **caractérisé en ce qu'**on réalise la chambre de soupape (3) avec une allure allongée et **en ce qu'**on prévoit le premier agencement de surface de contact (23) sur une zone d'extrémité dans le sens de la longueur de la chambre de soupape (3).

5. Procédé selon la revendication 3 ou 4, **caractérisé en ce qu'**on prévoit le premier agencement de surface de contact (23) dans la zone de l'ouverture d'introduction (21) de la première unité de cage (13).

6. Procédé selon l'une des revendications 1 à 5, **caractérisé en ce qu'**on relie le corps de fixation (26) et la première unité de cage (13) de façon fixe entre eux par collage dans la position relative réglée.

7. Procédé selon l'une des revendications 1 à 6, **caractérisé en ce qu'**on harmonise les deux agencements de surface de contact (23, 24) au niveau de la forme de telle sorte qu'un glissement réciproque causé par des forces extérieures et/ou un roulement des agencements de surface de contact (23, 24) entraîne forcément un déplacement relatif entre l'élément flexible (4) et la première unité de cage (13) dans le sens d'une approche de la partie de commande (6) de l'élément de pliage (4) sur le siège de soupape (8).

8. Procédé selon l'une des revendications 1 à 7, **caractérisé en ce qu'**on fait pivoter ou basculer le corps de fixation (26) et la première unité de cage (13) l'un par rapport à l'autre pour l'obtention de la précontrainte souhaitée de la partie de commande (6).

9. Procédé selon la revendication 8, **caractérisé en ce qu'**on prévoit les deux agencements de surface de contact (23, 24) au moins partiellement avec un contour cylindrique.

10. Procédé selon l'une des revendications 1 à 7, **caractérisé en ce qu'**on fait coulisser le corps de fixation (26) et la première unité de cage (13) l'un par rapport à l'autre, pour obtenir la précontrainte souhaitée, transversalement à la direction longitudinale de l'élément flexible (4).

11. Procédé selon la revendication 10, **caractérisé en ce qu'**on réalise les deux agencements de surface de contact (23, 24) au moins partiellement sous la forme de surfaces obliques disposées de façon inclinée par rapport à la direction longitudinale de l'élément flexible (4).

12. Procédé selon l'une des revendications 1 à 11, **caractérisé en ce qu'**on vérifie la précontrainte à régler de la partie de commande (6) par un essai d'étanchéité dans la zone du siège de soupape (8).

13. Procédé selon l'une des revendications 1 à 12, **caractérisé en ce qu'**on place le corps de fixation (26) au moins partiellement de façon noyée dans la première unité de cage (13).

14. Soupape piézo-électrique, comprenant une cage de soupape (2), dans laquelle s'étend un élément flexible piézo-électrique (4), qui est fixé par une partie de maintien (5) sur une zone d'extrémité de façon solidaire au boîtier et dont l'autre zone d'extrémité est réalisée sous la forme d'une partie de commande (6) mobile, qui fait face à un siège de soupape (8), contre lequel elle est précontrainte de façon mécanique avec une force de fermeture, la cage de soupape (2) présentant une première unité de cage (13) définissant le siège de soupape (8) dans une chambre de soupape (3) et une seconde unité de cage (14) reliée de façon fixe à cette première unité de cage (13), et l'élément flexible (4) étant fixé par sa partie de maintien (5) sur la seconde unité de cage (14) faisant office de corps de fixation (26) et dépassant par sa partie de commande (6) à partir de la seconde unité de cage (14) dans la chambre de soupape (3) réalisée dans la première unité de cage (13), **caractérisée en ce que** la force de fermeture générée mécaniquement de la partie de commande (6) est prédéfinie par la position relative, réglée lors du montage, des unités de cage (13, 14) fixées l'une sur l'autre.

15. Soupape piézo-électrique selon la revendication 14, **caractérisée en ce que** les agencements de surface de contact (23, 24) des deux unités de cage (13, 14) sont réalisés dans leur zone de contact au moins partiellement sous la forme de surfaces cylindriques ou de surfaces obliques agencées de façon inclinée par rapport à la direction longitudinale de l'élément flexible (4).
